# EUROPEAN PATENT SPECIFICATION

(11) **EP 3 557 730 B1**
(45) Date of publication and mention of the grant of the patent: **10.03.2021**
(21) Application number: 18192530.6
(22) Date of filing: 04.09.2018
(51) Int. Cl.: H02J 50/10

(54) **POWER NETWORK DEVICE**
STROMNETZVORRICHTUNG
DISPOSITIF DE RÉSEAU ÉLECTRIQUE

(30) Priority: 19.04.2018 EP 18168232; 08.06.2018 US 201816003360; 31.08.2018 EP 18192042
(43) Date of publication of application: 23.10.2019
(73) Proprietor: Siemens Aktiengesellschaft, 80333 München (DE)
(72) Inventor: BARAIYA, Vijay Kumar, 560001 Bangalore (IN); BHAMIDIPATI, Suryanarayana, 560066 Bangalore, Karnataka (IN); BHATIA, Rahul, 560100 Bangalore, Karnataka (IN); DEOKAR, Chetan Sharad, 560076 Bangalore (IN); VENKATESWARAN, Sornam Viswanathan, 560084 Bangalore, Karnataka (IN); VENKATRAMANI, Anand, 560076 Bangalore (IN); ISSANI, Siraj, 560017 Bangalore, Karnataka (IN)
(74) Representative: Patentanwaltskanzlei WILHELM & BECK

(56) References cited:
- US-A1- 2015 091 385
- US-A1- 2016 049 800
- US-A1- 2016 209 454
- US-A1- 2017 179 732

## Description

The present invention relates to a heatsink free power network device. More particularly, the present invention relates to a wireless fault detection and indication device powered by an electromagnetic energy harvesting system having an increased range of operation and high measurement accuracy.

Typically, sensors are deployed in many regions of a power grid to sense the voltage and the current of transmission lines. A primary functionality of these sensors is to detect faults so that fault localization time is reduced thus reducing downtime of grids. Downstream sections of the grids carry very low currents, for example, about 3A whereas the upstream sections carry high currents up to about 600A. During occurrence of a fault, this current may go up to 1800A. These fault sensors thus, need to measure and operate with a wide dynamic range and are required to be designed so as to maximize power at lower line currents and minimize power as well as resultant heating at higher line currents. Conventional methods and systems limit power transfer at higher line currents by employing range extenders that limit voltage. However, these are suited for DC sources and their operation is largely temperature dependent thereby, rendering them inefficient for power constrained devices that may involve component variations. Moreover, these power network devices need to operate with a high reliability, for example having a functional life greater than ten years without maintenance for the entire duration of functional life since removing and reinstalling decreases the operating quality of grids.

Furthermore, these fault sensors are mounted on existing transmission lines, due to which the fault data needs to be wirelessly transmitted to a base station. Moreover, as these sensors are mounted on existing transmission lines without disconnecting the lines to slide in the sensors, a flux concentrator core of the sensor, that harvests power from the transmission lines, has to be of a split configuration so as to form a clamp around the transmission line and enclose line current thereby, creating an air gap in the core. Such power being harvested is heavily dependent on the air gap as well as the mechanical variations associated with remote manual mounting onto the transmission lines. The harvested power is directly proportional to square of the line current flowing through it and therefore, demands a flux concentrator large enough to extract minimum power required for operating the sensor at the downstream sections of the grid. The harvested power needs to support the measurement of parameters as well as processing of the measurements. However, when the line current is high, power dissipation in the sensor increases thereby, producing a challenge for heat dissipation together with a wide dynamic range of operation.

Achieving high accuracy measurements with the aforementioned power network devices that harvest energy electromagnetically from the line current poses a power consumption challenge. This in turn puts constraints on quantity, quality, and topologies of components that can be included in the electronics associated with such power network devices. Conventional methods and systems address the accuracy and component design challenge by employing multi-stage amplification or multiple amplifiers in parallel. However, this calls for higher number of components resulting in increased power consumption and costs associated with the design. Moreover, there is a possibility of errors increasing in cascade when multi-stage amplification is employed.

Document US 2017/179732 A1 informs about an energy harvesting system including an electrical conductor, an instrument transformer disposed around the electrical conductor, at least one tuning capacitor electrically coupled in parallel to a secondary inductor of the instrument transformer, at least one switch, coupled in series with the at least one tuning capacitor, and an electrical load, that is electrically coupled to the secondary inductor and the at least one switch.

Document US 2016/209454 A1 informs about a wireless sensor apparatus for determining and reporting the status of an electrical wire, comprising a housing, an electrical energy harvesting device, wherein the electrical energy harvesting device comprises an electric current detector, voltage detector, an electric power source, a microcontroller, a mechanically rigid base, a wireless data transmission antenna, and a visual indicator.

Document US 2015/091385 A1 informs about a method of charging a power harvested supply in an electronic communication device. A RF field is received at the antenna of the electronic communication device and a differential voltage is generated from the RF field. In response to the differential voltage, a bandgap reference voltage and a reference current are generated. In response to the differential voltage and the bandgap voltage a shunt current is generated. If the shunt current is more than the reference current, a bank of switching devices is activated. Document US 2016/049800 A1 informs about a primary and secondary resonance circuit. Non-contact power supply is conducted by electromagnetic resonance of the primary and secondary resonance circuit. A changeover circuit changes over connection of a secondary resonance coil and secondary capacitor to a series connection or a parallel connection. A detection circuit detects impedance on a power receipt side. A changeover control circuit controls changeover conducted by the changeover circuit, depending upon the impedance detected by the detection circuit. Therefore, it is an object of the present invention to provide a heat sink free power network device of the aforementioned kind that offers a wide dynamic range of operation with high measurement accuracy, without increasing costs and design complexity associated therewith.

The present invention disclosed herein achieves the aforementioned object by providing a power network device according to the independent claim 1, the device physically disposable on a current carrying conductor and comprising a sensor module, a processor, a power harvesting module, an energy storage module, and a power transfer control module, in operable communication with one another. The power harvesting module comprises an impedance regulation module, a dynamic burden impedance, and a voltage limiting module. The power network device disclosed herein harvests power from the current carrying conductor by harvesting an induced voltage proportional to a line current flowing in the current carrying conductor. According to an embodiment of the present invention, the current carrying conductor refers to a power line such as an overhead line or an underground cable of an electric grid, that is, a power transmission network and/or a power distribution network. According to an embodiment of the present invention, the power network device is a fault sensor indicator device. According to other embodiment of the present invention, the power network device is any device that detects and/or indicates a condition associated with the power network and is powered using electromagnetic energy harvesting, that is, using the line current flowing in the power lines.

The sensor module measures one or more parameters associated with the current carrying conductor. The sensor module comprises a flux concentrator and at least one coil wound on the flux concentrator to measure the parameters. The parameters comprise, for example, a line current and a line voltage associated with the current carrying conductor. The processor detects a condition in the power network based on the parameters, sensed by the sensor module. The condition comprises, for example, a fault such as a line to line fault, a line to earth fault, a short circuit fault, etc., an unbalance in one or more of the parameters when compared to prescribed grid operating limits such as unbalance line voltage, unbalance line current, unbalance line phase, etc., isolation of a part of the power network, etc. The processor refers to any one of microprocessors, central processing unit (CPU) devices, finite state machines, microcontrollers, digital signal processors, an application specific integrated circuit (ASIC), a field-programmable gate array (FPGA), etc., or any combination thereof, capable of executing computer programs or a series of commands, instructions, or state transitions. The processor may also be implemented as a processor set comprising, for example, a general purpose microprocessor and a math or graphics coprocessor. The term processor is not used as a limiting term and may extend to a controller or a microcontroller.

According to an embodiment of the present invention, the power network device comprises an indicator module that indicates the condition, for example, via an audio signal, an audio-visual signal, a visual signal, etc., such as by flashing light emitting diodes. According to an embodiment of the present invention, the power network device comprises a communication module communicating the condition and/or the parameters to an external system such as a communication hub at a substation. The communication module, for example, employs a Zigbee communication protocol.

The power harvesting module harvests an induced voltage proportional to the line current, and generates power for powering one or more modules of the power network device, for example, at least the processor. The power harvesting module comprises a flux concentrator and at least one coil wound on the flux concentrator to harvest the induced voltage proportional to the line current. The flux concentrator converts electrical energy being harvested from a line current flowing in the current carrying conductor into magnetic energy in form of an electromagnetically induced flux. The coil wound on the flux concentrator, then converts this magnetic energy into an electrical equivalent in form of an induced voltage which in turn is used to generate power for powering one or more modules of the power network device. The coil is configured as an induction coil comprising a wire wound around the flux concentrator. In an embodiment of the present invention, the flux concentrator comprises a magnetic core. In another embodiment of the present invention, the flux concentrator comprises a non-magnetic core thereby producing an air-core flux concentrator. The coil couples an induced voltage proportional to a line current flowing in the current carrying conductor, for powering a load. Sinusoidally time-varying current flows in the current carrying conductor producing time-varying magnetic fields around the conductor. Windings of the coil positioned proximal to the current carrying conductor couple with the time-varying magnetic fields thereby producing an induced voltage therewithin. According to the present invention, the flux concentrator with the wound coil comprises a reactive component and the coil comprises a resistive component.

The impedance regulation module of the power harvesting module dynamically regulates impedance in the power harvesting module for controlling transfer of power harvested using the induced voltage and the line current to the processor, the indicator module, and the parameter conditioning module. As used herein, the term "impedance" refers to a source impedance seen by the power harvesting module due to the flux concentrator and the coil of the power network device. For a time-varying sinusoidal current flowing in the current carrying conductor, a source impedance Z_{source} is calculated as sum of a reactance X_{CC} offered by an inductive and/or a capacitive component of the wound coil with the flux concentrator, and a resistance R_{Coil} of the coil. The power harvesting module harvests power using the induced voltage and the line current which are in turn affected by the source impedance Z_{source}. The impedance regulation module comprises a compensating impedance at least partially nullifying a reactance of a coil, that is, X_{CC} of the power harvesting module when the power harvested is less than a predefined power threshold. Thus, the impedance regulation module dynamically regulates the source impedance Z_{source}. The compensating impedance of the impedance regulation module is selected based on the coil such that, a reactance X_{C} of the compensating impedance at least partially nullifies the reactance X_{CC} of the wound coil. Advantageously, the compensating impedance is in resonance with the source impedance Z_{source}, thereby, reducing the source impedance Z_{source} to a resistive component R_{Coil} of the coil. This leads to maximum harvested power being transferred from the power harvesting module which in turn is used to power one or more modules of the power network device and is stored in the energy storage module of the power network device.

The impedance regulation module comprises a switching module and a power detection module in operable communication with the compensating impedance. The power detection module detects the power harvested based on the induced voltage and the line current I_{L}. Advantageously, the power detection module detects the power in real time. The power detection module at least partially includes the compensating impedance, in communication with the switching module, when the power harvested is less than a predefined power threshold. The switching module is an electronically controlled switch, for example, a relay whose coil is the control element, a solid state relay whose photodiode is the control element, etc. According to an embodiment of the present invention, the compensating impedance comprises two or more capacitors connected in series. In this embodiment, the power detection module along with the switching module includes one or more of the series connected capacitors into the power harvesting module. The power detection module excludes the compensating impedance when the power harvested is greater than a predefined power threshold and/or equal to the predefined power threshold. By excluding the compensating impedance, the power harvesting module ensures safety of the downstream electronics, thereby, increasing a range of harvesting of power from a varying line current while ensuring that power is limited within a prescribed range of safe operation of load connected thereto. The power threshold is defined based on power requirements of the load being driven by the power harvesting module, that is, one or more modules of the power network device, and the input power available that is harvested from the line current flowing in the current carrying conductor.

The dynamic burden impedance of the power harvesting module is configured as a variable load regulating an output voltage of an impedance regulation module of the power harvesting module, based on a predefined voltage threshold to maintain flux induced in the power harvesting module. The dynamic burden impedance includes a voltage reference module and a dynamic impedance module in operable communication with one another. The voltage reference module defines the predefined voltage threshold for regulating the output voltage of the impedance regulation module. The predefined voltage threshold is selected based on one or more properties of the flux concentrator and the coil of the power harvesting module, including for example, a material and a geometry of the flux concentrator and winding elements, a saturation limit of the flux concentrator, and the output voltage of the impedance regulation module. The dynamic burden impedance comprises at least one power transistor selected based on the predefined voltage threshold.

The voltage limiting module of the power harvesting module regulates an output voltage of the power harvesting module, based on a predefined load voltage threshold to protect one or more modules of the power harvesting module. The voltage limiting module employs a hardware impedance control module that regulates the output voltage by increasing and decreasing overall impedance of the power harvesting module based on the load voltage threshold. The load voltage threshold is defined based on power requirements of the load being powered. Advantageously, the dynamic burden impedance and the voltage limiting module are configured such that the dynamic burden impedance is a shunt voltage limiter allowing lower voltages, for example, lesser than or equal to about 80V to be applied downstream and the voltage limiting module is a series voltage limiter allowing voltages lesser than or equal to about 20V to be applied downstream. According to an embodiment of the present invention, the power harvesting module comprises a current limiter having for example, at least one power transistor. The current limiter protects the impedance regulation module from high line currents.

The power network device comprises an energy storage module storing the harvested power. The energy storage module comprises one or more capacitors such as super capacitors selected based on requirements of the load being powered, that is, one or more modules of the power network device. The power network device comprises a power transfer control module selectively transferring the harvested power to one or more modules of the power network device, from the power harvesting module or the energy storage module. The power transfer control module comprises a comparator module and a transfer switching module. The comparator module compares the harvested power stored in the energy storage module with an upper threshold level and a lower threshold level. The transfer switching module applies a short circuit across a coil of the power harvesting module when the harvested power stored in the energy storage module equals the upper threshold level. The transfer switching module removes the short circuit across the coil when the harvested power stored in the energy storage module equals the lower threshold level. The lower threshold level is defined such that the stored power suffices power requirements of all the modules of the power network device drawing power from the power harvesting module based on their rated operating voltages. The upper threshold level is defined based on the storage capacity of the energy storage module as well as on the modules drawing power from the power harvesting module. For example, the lower threshold level is a minimum of all maximum rated voltages of the modules of the power network device whereas the upper threshold level is a maximum of all minimum rated voltages of the modules of the power network device. The transfer switching module is a fast switching and high current rating switch. Advantageously, power dissipated in the transfer switching module is negligible due to the coil being short circuited as a result of which heat sink size can be reduced and/or the heat sink can be eliminated thereby reducing costs associated with the power network device.

The power transfer control module thus, operates in two modes comprising, a charging mode and a discharging mode. In the charging mode of operation, the power transfer control module allows the harvested power to be delivered to the one or more modules, for example, the processor, the indication module, the communication module, the parameter conditioning module, etc., of the power network device via the power harvesting module as well as to the energy storage module in order to store the harvested power therein. Once the harvested power stored in the energy storage module reaches the upper threshold level, the discharging mode of operation begins where the coil is shorted and input power being harvested is switched off. In this mode, the one or more modules being powered draw power from the energy storage module. As a result, the voltage across the energy storage module starts decreasing. The moment it becomes equal to the lower threshold level, the charging mode of operation begins. Thus, the power transfer control module dynamically changes the modes of operation by sensing source power availability and load power requirements at a given instant by using discrete components.

The power network device comprises a parameter conditioning module dynamically conditioning the parameters. The parameter conditioning module in communication with the processor, dynamically amplifies the parameters using an amplifier module based on one or more properties of a flux concentrator of the sensor module. The properties comprise, for example, a saturation limit of the flux concentrator. The amplifier module is a single stage amplifier module configurable for a predefined range of amplification factors. The amplification factors are defined corresponding to the line current ranging from about 3A to about 1800A. Advantageously, the parameters especially corresponding to lower line currents, for example, from about 2A to about 40A, when amplified by the parameter conditioning module, remain unaffected by noise and other distortions if any, in the power harvesting module, thereby, increasing accuracy of measurement of the parameters. The parameter conditioning module selects a maximum amplification factor, that is, a highest gain band by default, and verifies whether the flux concentrator core of the sensor module has saturated as a result of the amplified parameter. If yes, the parameter conditioning module reduces the amplification factor, for example, to a next lower factor, else uses the same to amplify the measured parameters for further processing by the processor. Advantageously, the parameter conditioning module employs a single stage amplifier configurable with one or more of the predefined amplification factors, for dynamically measuring a wide range of parameters without affecting accuracy associated therewith and eliminating calibration requirements associated with changes in the line current once installed thereby, achieving lower power consumption and lower operational costs.

The power harvesting module disclosed herein is configured as a switched mode power supply in communication with the power transfer control module and the energy storage module. Advantageously, the power harvesting module disclosed herein restricts heating of the power network device by achieving maximum power transfer at lower induced voltages and limited power transfer at higher induced voltages. The power harvesting module configured as the switched mode power supply also restricts overall heat dissipation in the power network device, thereby, allowing a heat sink-free device having a higher reliability, longer life of the harvesting coil, and operating in a wide dynamic range of line currents. The power network device disclosed herein includes a non-thermally conducting, that is a non-metallic, enclosure such as a plastic enclosure.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a block diagram of a power network device, according to an embodiment of the present invention.
- FIG 2A: illustrates a block diagram of a power harvesting module configured as a switched mode power supply, in operable communication with a power transfer control module and an energy storage module of the power network device shown in FIG 1, according to an embodiment of the present invention.
- FIG 2B: illustrates an electrical equivalent circuit diagram of the impedance regulation module shown in FIG 2A.
- FIGS 2C-2D: illustrate a block diagram and an electrical equivalent circuit diagram of the dynamic burden impedance shown in FIG 2A.
- FIG 2E: illustrates a graphical representation of voltage waveforms associated with an output voltage of the dynamic burden impedance shown in FIGS 2C-2D.
- FIG 2F-2G: illustrate a block diagram and an electrical equivalent circuit diagram of the voltage limiting module shown in FIG 2A.
- FIG 3: illustrates an electrical equivalent circuit diagram of a parameter conditioning module of the power network device shown in FIG 1.
- FIG 4: is a process flow chart illustrating a method for dynamically conditioning one or more parameters measured by the power network device shown in FIG 1.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

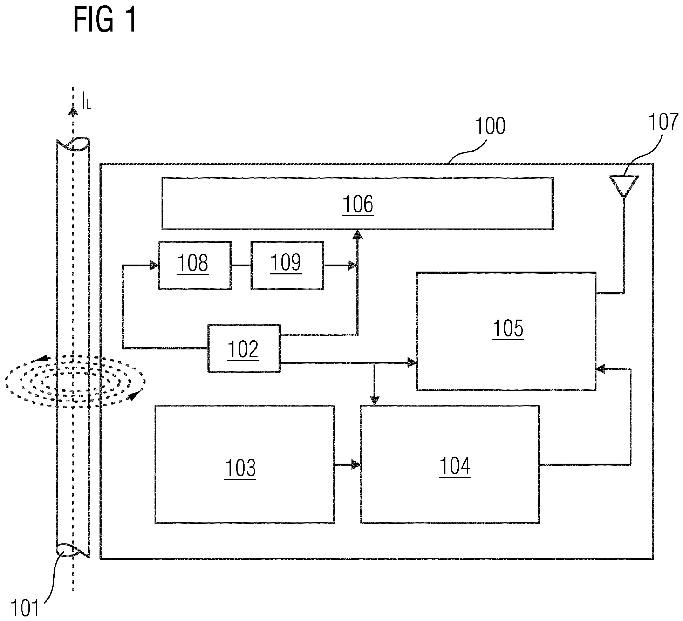

FIG 1 illustrates a block diagram of a power network device 100, according to an embodiment of the present invention. The power network device 100 is physically disposable on a current carrying conductor 101. The current carrying conductor 101 carries a line current I_{L} therewithin creating a magnetic field around itself in the direction shown in FIG 1. The power network device 100 comprises a power harvesting module 102, a power transfer control module 108, an energy storage module 109, a sensor module 103, a parameter conditioning module 104, a processor 105, an indicator module 106, and a communication module 107 in operable communication with one another. The power harvested is used for powering one or more of the processor 105, the parameter conditioning module 104, the indicator module 106, and the communication module 107, of the power network device 300 via the power harvesting module 102 or via the energy storage module 109.

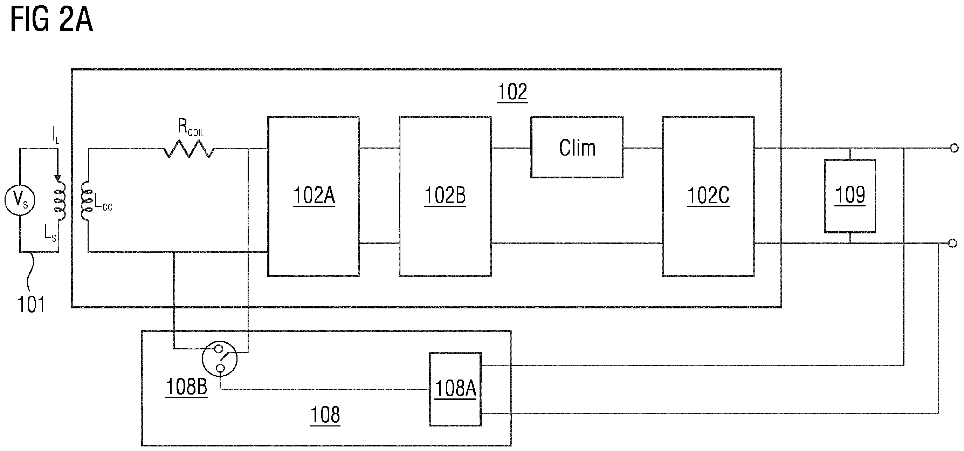

FIG 2A illustrates a block diagram of a power harvesting module 102 configured as a switched mode power supply, in operable communication with a power transfer control module 108 and an energy storage module 109 of the power network device 100 shown in FIG 1, according to an embodiment of the present invention. The power harvesting module 102 comprises an impedance regulation module 102A, a dynamic burden impedance 102B, and a voltage limiting module 102C, according to an embodiment of the present invention. The power harvesting module 102 comprises a flux concentrator such as a magnetic/non-magnetic core and a coil wound around the flux concentrator. The inductance L_{CC} represents an inductance of the flux concentrator and the wound coil whereas the resistance R_{Coil} represents a resistance of the wound coil. The flux concentrator with the coil wound around it is positioned near a bare or an insulated current carrying conductor 101. For example, the flux concentrator is positioned surrounding the current carrying conductor 101 such that the current carrying conductor 101 passes through the flux concentrator, that is, through an air gap created within a core of the flux concentrator. The magnetic field created around the current carrying conductor 101 shown in FIG 1, is coupled with the coil wound around the flux concentrator thereby, inducing a flux in the flux concentrator. The current carrying conductor 101 is represented by an electrical equivalent circuit having a source voltage V_{S} and an inductor L_{S} through which a line current I_{L} flows. The induced flux when coupled with the coil wound on the flux concentrator, produces an induced voltage V_{ind} across the coil which is in turn is applied to the impedance regulation module 102A, which in turn is applied to the dynamic source impedance 102B as Vₒₚ₁ and to the voltage limiting module 102C. The output voltage Vₒₚ₂ of the voltage limiting module 102C is then used for the powering the one or more modules of the power network device as well as charging the energy storage module 109. The power harvesting module 102 also comprises a current limiter Cₗᵢₘ which comprises a power transistor such as a MOSFET and/or a resistor that protects the impedance regulation module from overcurrent conditions.

The power transfer control module 108 comprises a comparator module 108A and a transfer switching module 108B. The transfer switching module 108B is connected across the coil wound on the flux concentrator. The comparator module 108A senses the voltage of the energy storage module 109 after charging and compares the same with the upper threshold level. When this voltage becomes equal to the upper threshold level, the transfer switching module 108B shorts the coil of the power harvesting module 102 to stop the power being harvested. Once the coil is short circuited, the modules of the power network device 102 draw their power from the energy storage module 109. The comparator module 108A senses the voltage of the energy storage module 109 while it is powering the modules of the power network device 100 and once it becomes equal to the lower threshold level, the transfer switching module 108B removes the short circuit applied across the coil in order for the power harvesting module 102 to start harvesting power from the current carrying conductor 101 once again.

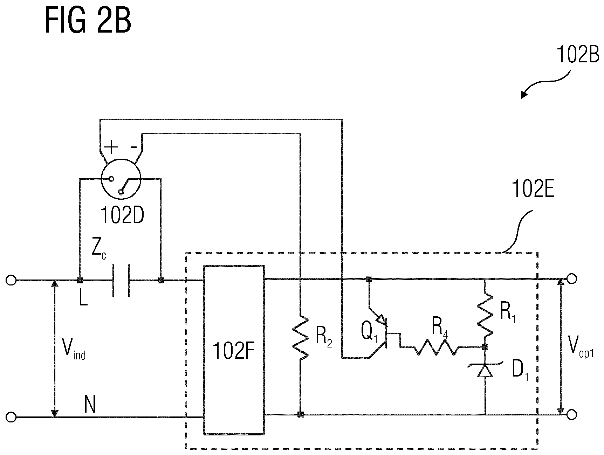

FIG 2B illustrates an electrical equivalent circuit diagram of the impedance regulation module 102A shown in FIG 2A. The impedance regulation module 102A controls transfer of power being harvested by the power harvesting module 102 using the induced voltage V_{ind} and the line current I_{L}, to the load connected thereto, that is, to one or modules of the power network device 100 shown in FIG 1. The impedance regulation module 102A comprises a switching module 102D, a power detection module 102E, and a compensating impedance Z_{C}.

The impedance regulation module 102A operates in two states. First state of operation is when the power harvested based on the induced voltage V_{ind} and the line current I_{L}, is lesser than a predefined power threshold P_{T} and second state of operation is when the power harvested is greater than or equal to the predefined power threshold P_{T}. In the first state of operation, the power detection module 102E keeps the switching module 102D de-activated. The compensating impedance Z_{C} remains to be connected in series with the R_{Coil}. A reactive component X_{C} of the compensating impedance Z_{C} is in resonance with the reactive component X_{CC} defined by the wound coil inductance L_{CC,} thereby reducing effective source impedance Z_{source} of the power harvesting module 102 equal to the coil resistance R_{Coil}, as given in the equation below:
This ensures maximum power transfer to load when the induced voltage V_{ind} is below a predefined power threshold.

In the second state of operation, the power detection module 102E detects that the power harvested based on the induced voltage V_{ind} and the line current I_{L}, has equaled or exceeded the predefined power threshold P_{T}. The power detection module 102E activates the switching module 102D such that the compensating impedance Z_{C} is bypassed, thereby making the effective source impedance Z_{source} dependent on the coil resistance R_{Coil} and the wound coil inductance L_{CC,} as given by the equation below:
Where X_{CC} = 2Πf (L_{CC}) and f is the frequency of operation, for example, 50Hz.

The power detection module 102E comprises a rectifier 102F, a transistor Q1, and a diode D1. The rectifier 102C converts an AC waveform of the induced voltage V_{ind} into a single ended voltage waveform which is compared with a bypass voltage V_{byp}. The bypass voltage V_{byp} is a voltage required for activating the switching module 102A. The bypass voltage V_{byp} is set based on the predefined power threshold P_{T}. For example, if the load being powered by the power harvesting system 100 has an operating power range of up to P_{T} Watts then the bypass voltage V_{byp} is selected such that the switching module 102D activates as soon as the bypass voltage V_{byp} becomes equal to or greater than P_{T}/I_{L}, in order to ensure the power being transferred to the load is within the predefined power threshold P_{T}. The impedance regulation module 102A at any time instant maintains power harvested less than the predefined power threshold P_{T}, that is, to maintain the induced voltage V_{ind} less than P_{T}/I_{L}.

In order to set the bypass voltage V_{byp} according to the predefined power threshold P_{T} the diode D1 and the transistor Q1 are selected such that:
Where V_{BE} is the cut-off voltage for the transistor Q1 to conduct and V_{ref} is the voltage required for the diode D1 to forward bias. When the induced voltage V_{ind} becomes equal to the base emitter voltage V_{BE}, the transistor Q1 conducts. Further as the induced voltage V_{ind} increases to equal sum of the base emitter voltage V_{BE} and the voltage V_{ref}, which is equal to the set bypass voltage V_{byp}, a control element of the switching module 102D activates, thereby bypassing the compensating impedance Z_{C} and increasing the effective source impedance Z_{source}, given by the equation below:
The increase in source impedance Z_{source} thus, limits the power being transferred to the load.

When the induced voltage V_{ind} starts decreasing and becomes lesser than the bypass voltage V_{byp} the switching module 102D gets de-activated. The induced voltage V_{ind} decreases further to equal the base emitter voltage V_{BE}, the diode D1 comes out of its forward bias operation region. The induced voltage V_{ind} decreases further below the base emitter voltage V_{BE}, the transistor Q1 stops conducting, thereby bringing the compensating impedance Z_{C} back in connection thereby, decreasing the effective source impedance Z_{source}, given by the equation below:
The decrease in source impedance Z_{source} thus, increases the power being transferred to the load.

Thus, the impedance regulation module 102A, detects power available at the source using current and/or voltage signatures, that is, the line current I_{L} and the induced voltage V_{ind}, and based on this detected power, dynamically changes source impedance Z_{source} to create a resonance effect and increase power transferred to load at lower operating points, whereas decrease power transferred to load at higher operating points, thereby, increasing a range of operation, reducing overall weight, as well as stress experienced by downstream loads connected to the power harvesting module 102.

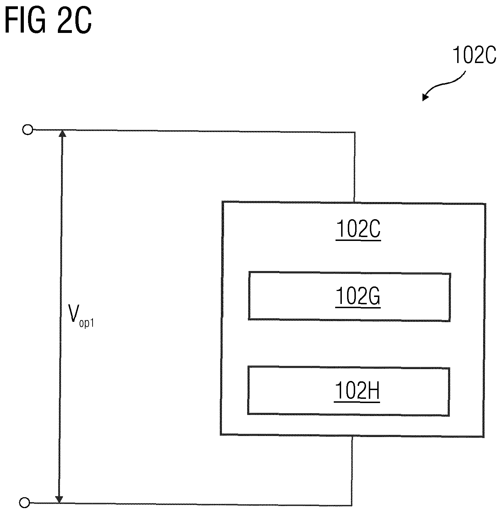

FIGS 2C-2D illustrate a block diagram and an electrical equivalent circuit diagram of the dynamic burden impedance 102B shown in FIG 2A. FIG 2C illustrates a block diagram of the dynamic burden impedance 102B, wherein, a voltage Vₒₚ₁, which is the output voltage of the impedance regulation module 102A shown in FIGS 2A, 2B, is applied across the dynamic burden impedance 102B. The dynamic burden impedance 102B comprises a voltage reference module 102G and a dynamic impedance module 102H in operable communication with each other. The dynamic burden impedance 102B acts a variable load in the power harvesting module 102 in order to maintain a constant output voltage Vₒₚ₁ irrespective of changes in the line current I_{L} and the induced voltage V_{ind}. This is achieved by shunting the increased current using the dynamic burden impedance 102B, thereby regulating flux induced in the core of the flux concentrator.

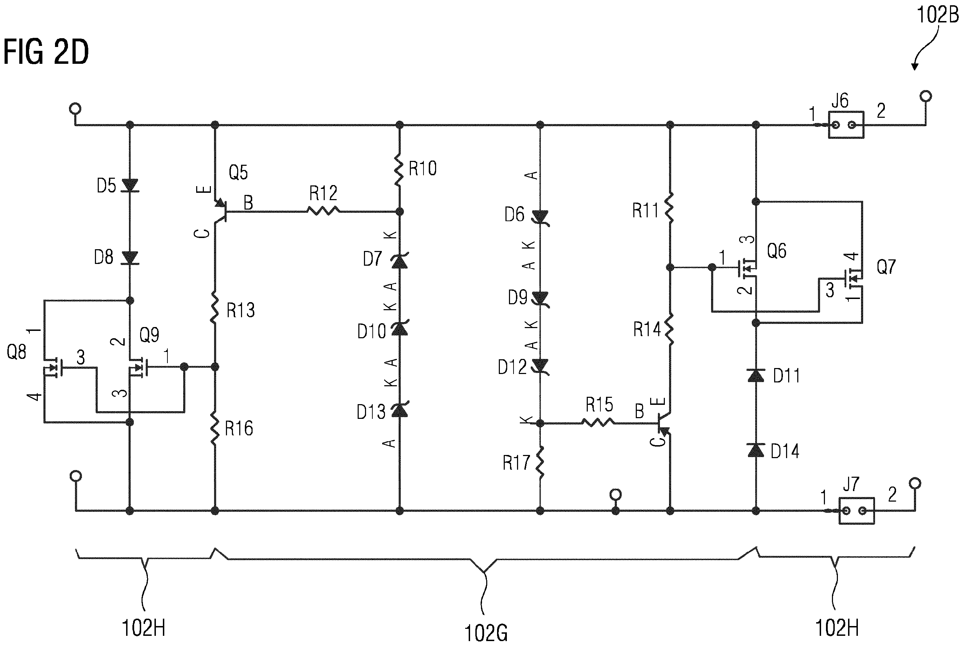

FIG 2D illustrates an electrical equivalent diagram of the dynamic burden impedance 102B including the voltage reference module 102G and the dynamic impedance module 102H. The voltage reference module 102G includes Zener diodes D7, D10, D13, D6, D9 and D12 used to set a voltage threshold, that is, a limiting value at which the output voltage Vₒₚ₁ is to be regulated. Quantity of the Zener diodes and their ratings may be customized based on the voltage threshold required to be set. The voltage threshold is defined based on downstream electronics which is connected and/or powered by the power harvesting module 102. The dynamic impedance module 102H includes power transistors, that is, MOSFETs Q8, Q9 and Q6, Q7. Each of the pairs of these MOSFETs are connected to the Zener diodes D7, D10, D13 and D6, D9, D12 via PNP transistors Q5 and Q10 for operation in positive cycle and negative cycle respectively. During a positive cycle of operation, when an input voltage, that is, the secondary voltage, rises above the voltage threshold defined by a combined breakdown voltage of the Zener diodes D7, D10, and D13, and the V_{BE} drop of the PNP transistor Q5, then the Q5 conducts. Thus, the voltage threshold is defined by the equation given below:
With this a proportional current flows on the collector of Q5 increasing the V_{GS} voltage of the MOSFETs Q8 and Q9. As this V_{GS} voltage increases, the R_{DS} of the MOSFETs decrease. As R_{DS} decreases additional current is drawn from the source, thereby, increasing drop across source, resulting, in a decrease in the voltage across the Zener diodes D7, D10, and D13, and therefore the V_{BE} of the PNP transistor Q5, thereby reducing, the collector current of Q5 and V_{GS} voltage of the MOSFETs Q8 and Q9. As this V_{GS} voltage decreases, the R_{DS} of the MOSFETs increases thereby, reducing current drawn from the source. This in turn reduces the drop across source, thus, bringing back the operation state to an original state. The dynamic burden impedance thus limits the output voltage Vₒₚ₁ applied downstream. The additional current is mainly drawn by the MOSFETs Q8 and Q9 which are power devices and hence, are capable of handling larger power as compared to the Zener diodes D7, D10, and D13. The operation explained here is for the positive cycle operation and the negative cycle operation is the same with polarities reversed where the Zener diodes D6, D9, and D12 along with the PNP transistor Q10 and MOSFETs Q6 and Q7 come into operation. Thus, the dynamic impedance module 102H employs power MOSFETs Q7, Q8, Q9, and Q10, as dynamic burden resistors and regulates output voltage Vₒₚ₁ by changing V_{GS} of the MOSFETs in comparison to the voltage threshold set using high precision low power Zener diodes D7, D10, D13, D6, D9, and D12. By dynamically changing the burden impedance and thereby drawing additional current from the source, an additional voltage drop across source impedance is created which acts as a negative feedback control system thereby, avoiding flux increase and saturation of the flux concentrator of the power harvesting module 102.

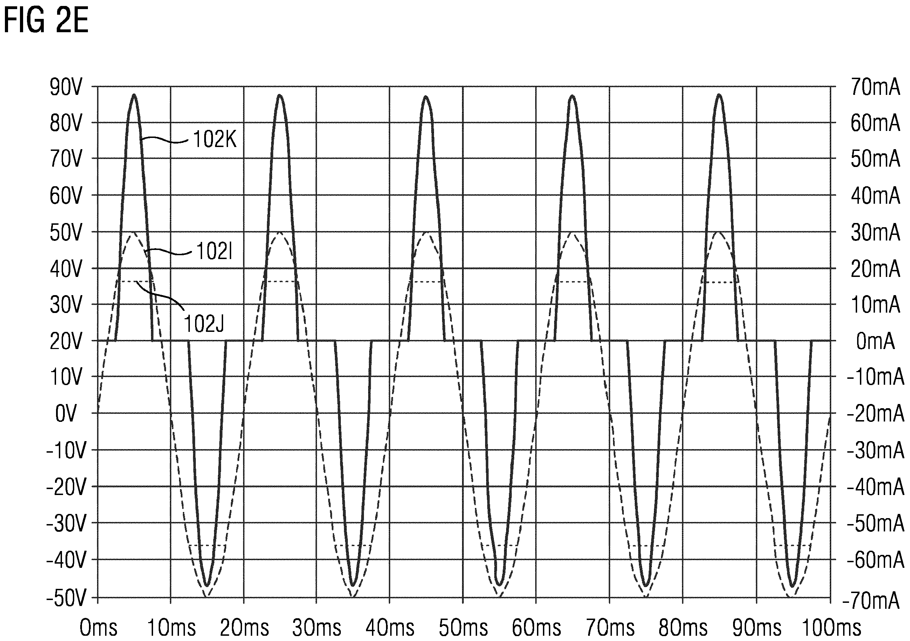

FIG 2E illustrates a graphical representation of voltage waveforms 1021, 102J, and 102K associated with an output voltage Vₒₚ₁ of the dynamic burden impedance 102B shown in FIGS 2C-2D. The voltage waveforms 1021, 102J, and 102K are plotted with respect to time and current drawn by the dynamic impedance module 102H. The voltage waveform 1021 represents an input voltage that is, the output voltage of the impedance regulation module 102A. The voltage waveform 102J represents the voltage limited by the dynamic burden impedance 102B beyond a voltage threshold of 37V which is achieved with a 36.3V Zener diode in combination with 0.7V V_{BE} drop. The voltage waveform 102K represents the current drawn by the dynamic burden impedance 102B to maintain the output voltage Vₒₚ₁ constant.

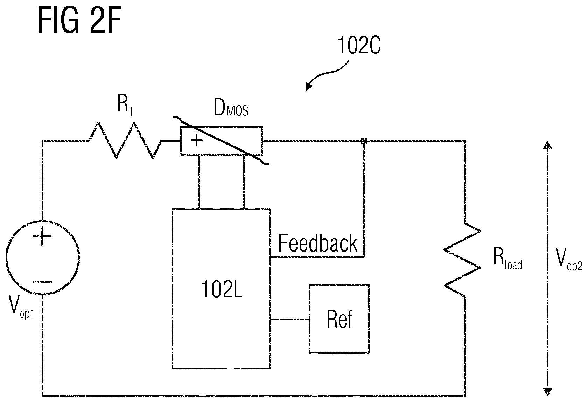

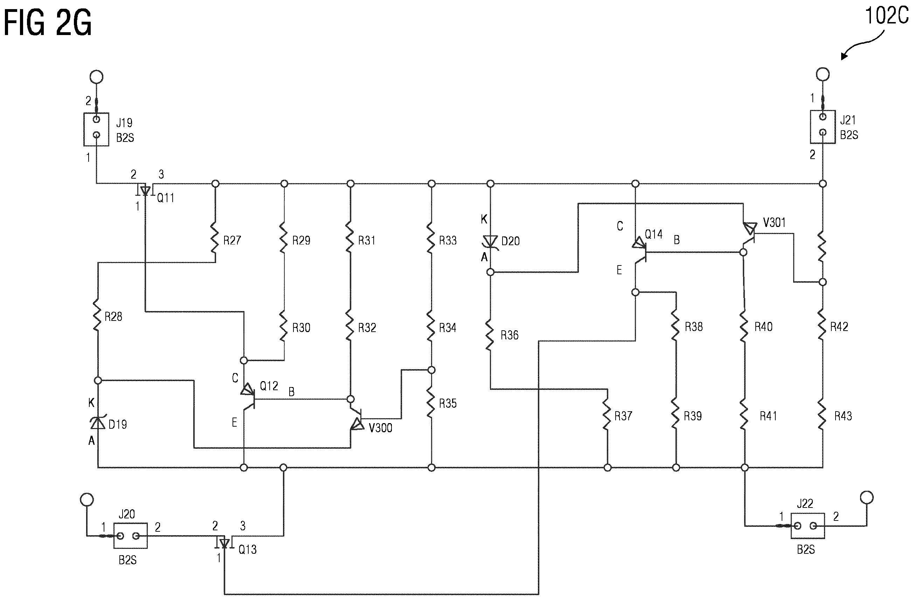

FIG 2F-2G illustrate a block diagram and an electrical equivalent circuit diagram of the voltage limiting module 102C shown in FIG 2A that regulates an output voltage Vₒₚ₂ of the power harvesting module 102, based on a predefined load voltage threshold to protect one or more modules of the power network device 100 being powered. FIG 2F illustrates a block diagram of the voltage limiting module 102C comprising a depletion MOSFET D_{MOS} in a normally closed mode of operation in an operable connection with an impedance control module 102L set at a reference voltage equal to the load voltage threshold. When the MOSFET D_{MOS} is in a normally closed mode of operation, that is, when the input voltage is less than the reference voltage, the input voltage is passed to the load with minimal drop. When the input voltage starts increasing, it is applied as feedback through the impedance control module 102L to the MOSFET D_{MOS} thereby, increasing the resistance of the MOSFET D_{MOS} and limiting the voltage seen by the load represented by the resistance R_{Load} to a value defined by the reference voltage. FIG 2G illustrates an electrical equivalent circuit diagram of the voltage limiting module 102C comprising MOSFETs Q11 and Q13 as the MOSFET D_{MOS} for positive and negative half cycles of an AC input voltage. Considering a positive half cycle operation, when an input voltage is applied at Q11 and Q11 is in its normally closed mode, that is, V_{GS} is zero and Q11 is conducting, the input voltage is passed through Q11 and it appears across the Zener D19 via the resistors R27 and R28. If this voltage is less than the breakdown voltage of the Zener D19 then all the voltage appears across the Zener D19 and in turn at the emitter of transistor V300. As the base of V300 sees a stepped down version of this voltage, the V300 doesn't conduct. However, once the voltage becomes higher than the breakdown voltage of the Zener D19, the voltage is clamped by the Zener D19 whereas the voltage at the base of V300 increases as it is derived via a resistance divider and V300 conducts thereby, setting the transistor Q12 into conduction which in turn pulls down the gate voltage of the MOSFET Q11. With this, the drain-source resistance of Q11 increases resulting in a higher drop across Q11 and protecting the load connected at the output of the voltage limiting module 102C. The limiting voltage, that is, the reference voltage as shown in FIG 2F is set using below equation:
Thus, the limiting voltage is independent of the MOSFET characteristics and only depends on transistor and Zener voltages. Therefore, the voltage limiting module 102C limits the output voltage Vₒₚ₂ to Vₗᵢₘ thereby, protecting the downstream electronics. The voltage limiting module 102C shown in FIGS 2F and 2G can be employed for AC as well as DC sources with minor modifications in the components used.

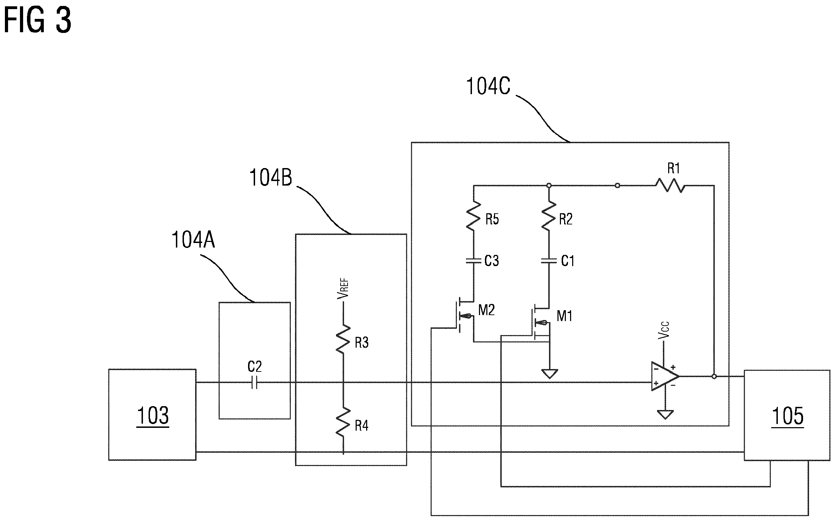

FIG 3 illustrates an electrical equivalent circuit diagram of a parameter conditioning module 104 of the power network device 100 shown in FIG 1. The parameter conditioning module 104 in communication with the processor 105 of the power network device 100 shown in FIG 1, dynamically amplifies one or more parameters using an amplifier module 104C based on one or more properties of a flux concentrator of the sensor module 103. The parameter conditioning module 104 comprises an AC coupler module 104A, an offset module 104B and the amplifier module 104C. The AC coupler module 104A receives an input, for example, the induced voltage V_{ind} harvested by the coil wound flux concentrator of the sensor module 103. The coupler module 104A removes DC component associated with the induced voltage V_{ind}. This is because the DC component is typically unknown and/or varies greatly which may lead to saturation of the flux concentrator when amplified with higher gain values. The AC component is then passed to the offset module 104B comprising a resistance divider designed so as to add a DC component predefined based on a reference voltage. The reference voltage is selected so as to ensure that a quiescent operating point of the amplifier module 104C accommodates entire dynamic range of the parameters being measured by the sensor module 103, and minimizes any distortion associated therewith. Thus, the offset module 104B on adding the predefined DC components clamps the input parameter, that is, the induced voltage V_{ind} to a known DC operating point. The amplifier module 104C is a single stage amplifier comprising two or more MOSFETs, for example, M1, M2, etc., as shown in FIG 3, which are switched on or off by the processor 105 so as to select an amplification factor, that is, a gain value with which the induced voltage V_{ind} is amplified. The amplification factor is selected based on saturation tolerance of the flux concentrator core and/or a range of line current I_{L}. The amplified induced voltage V_{ind}, is then passed to the processor 105 via an analog to digital converter (not shown) for further processing, for example, detection of a condition of the power network.

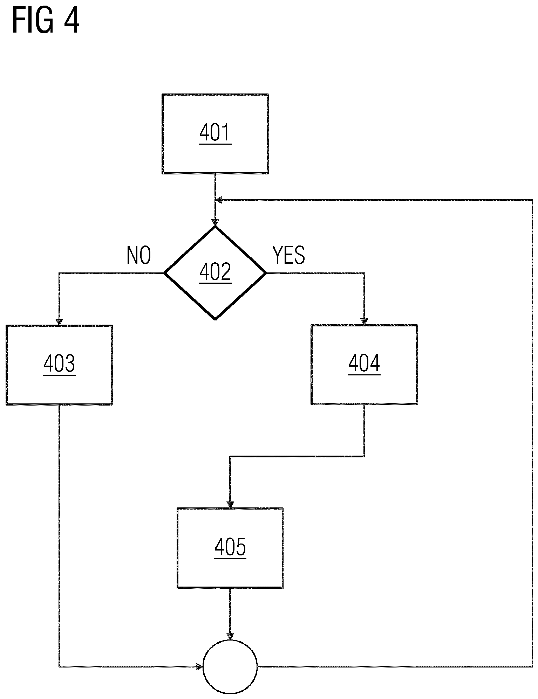

FIG 4 is a process flow chart illustrating a method for dynamically conditioning one or more parameters measured by the power network device 100 shown in FIG 1. The method disclosed herein employs the parameter conditioning module 104 shown in FIG 3 for dynamically conditioning the parameters measured. At step 401, the method selects the highest amplification factor. At step, 402, the method verifies if the core of the flux concentrator of the sensor module 103 is saturated. If not, then at step 403 the amplifier module 104C of the parameter conditioning module 104 amplifies the parameter using the amplification factor. If yes, at step 404, the parameter conditioning module 104 reduces the amplification factor by one to the next lower amplification factor. At step 405, the parameter conditioning module 104 selects the reduced amplification factor and repeats steps 402-404 so long as the core does not saturate. The process flow disclosed herein precludes need to track the changes in the line current I_{L} and also manual intervention to select an amplification factor, thereby, avoiding calibration during installation and/or change in line current I_{L}.

The foregoing examples have been provided merely for the purpose of explanation and are in no way to be construed as limiting of the present invention disclosed herein. Although the invention has been described herein with reference to particular means, materials, and embodiments, the invention is not intended to be limited to the particulars disclosed herein; rather, the invention extends to all functionally equivalent structures, methods and uses, such as are within the scope of the appended claims.

### Reference list:

100 power network device
101 current carrying conductor
I_{L} line current
L_{CC} inductance offered by coil and the flux concentrator
V_{S} source voltage
L_{S} inductance of the current carrying conductor
R_{Coil} resistance offered by coil
Cₗᵢₘ current limiter
Vₒₚ₁ output voltage of impedance regulation module
Vₒₚ₂ output voltage of power harvesting module
102 power harvesting module
102A impedance regulation module (Dyn src impedance)
102B dynamic burden impedance (shunt V_lim/flux limiting)
102C voltage limiting module (series V_lim)
102D switching module
102E power detection module
102F rectifier
102G voltage reference module
102H dynamic impedance module
1021, 102J, 102K voltage waveforms associated with dynamic burden impedance
102L Impedance control module
103 sensor module
104 parameter conditioning module (AFE)
104A coupler module
104B offset module
104C amplifier module
105 processor/controller
106 indicator module
107 communication module
108 power transfer control module
108A comparator module
108Bq transfer switching module
109 energy storage module

## Claims

1. A power network device (100) physically disposable on a current carrying conductor (101), the power network device (100) comprising:
- a sensor module (103) configured to measure one or more parameters associated with the current carrying conductor (101) ;
- a processor (105) configured to detect a condition in the power distribution network based on the one or more parameters;
- a power harvesting module (102) configured to harvest power by harvesting an induced voltage (V_{ind}) proportional to the line current (I_{L}), for powering one or more modules of the power network device (100), wherein the power harvesting module (102) comprises:
o an impedance regulation module (102A); and
o a voltage limiting module (102C);
- an energy storage module (109) configured to store the harvested power;
- a power transfer control module (108) configured to selectively transfer the harvested power to the one or more modules of the power network device (100), from one of the power harvesting module (102) and the energy storage module (109) ;
**characterized in that** the power harvesting module (102) further comprises a dynamic burden impedance (102B), comprising a voltage reference module (102G) and a dynamic impedance module (102) in operable communication with each other,
wherein the voltage reference module (102G) is configured to define a predefined voltage threshold, which acts as a basis for regulating an output voltage (Vₒₚ₁) of the impedance regulation module (102A), and
wherein the impedance regulation module (102A) comprises a switching module (102D) and a power detection module (102E) for detecting the power harvested based on the induced voltage (V_{ind}) and the line current (I_{L}) and for activating the switching module (102D).

2. The power network device (100) according to claim 1, wherein the power harvesting module (102) comprises a flux concentrator and at least one coil wound on the flux concentrator to harvest the induced voltage (V_{ind}) proportional to the line current (I_{L}).

3. The power network device (100) according to claim 1, wherein the impedance regulation module (102A) is configured to dynamically regulate impedance in the power harvesting module (102) for controlling transfer of power harvested using the induced voltage (V_{ind}) and the line current (I_{L}), to at least the processor (105).

4. The power network device (100) according to any one of the claims 1 and 3, wherein the impedance regulation module (102A) further comprises a compensating impedance (Zc) at least partially nullifying a reactance of a coil of the power harvesting module (102) when power harvested using the induced voltage (V_{ind}) and the line current (I_{L}), is less than a predefined power threshold.

5. The power network device (100) according to claim 1, wherein the dynamic burden impedance (102B) is configured as a variable load to regulate an output voltage (Vₒₚ₁) of the impedance regulation module (102A), based on a predefined voltage threshold to maintain flux induced in the power harvesting module (102).

6. The power network device (100) according to claim 1, wherein the voltage limiting module (102C) is configured to regulate an output voltage (Vₒₚ₂) of the power harvesting module (102), based on a predefined load voltage threshold to protect at least the processor (105) being powered.

7. The power network device (100) according to claim 1, wherein the power harvesting module (102) is configured as a switched mode power supply.

8. The power network device (100) according to claim 1, wherein the sensor module (102) comprises a flux concentrator and at least one coil wound on the flux concentrator to measure the one or more parameters.

9. The power network device (100) according to any one of the previous claims further comprising, a parameter conditioning module (104) configured to dynamically condition the one or more parameters.

10. The power network device (100) according to claim 9,
wherein the parameter conditioning module (104) in communication with a processor (105), is configured to dynamically amplify one or more parameters measured by a sensor module (103) using an amplifier module (104C) based on one or more properties of a flux concentrator of the sensor module (103).

11. The power network device (100) according to claim 10,
wherein the amplifier module (104C) is a single-stage amplifier module configurable for a predefined range of amplification factors.

12. The power network device (100) according to claim 1,
wherein the power transfer control module (108) comprises:
- a comparator module (108A) configured to compare the harvested power stored in the energy storage module (109) with an upper threshold level and a lower threshold level; and
- a transfer switching module (108B) configured to apply a short circuit across a coil of the power harvesting module (102) when the harvested power stored in the energy storage module (109) equals the upper threshold level, and remove the short circuit across the coil when the harvested power stored in the energy storage module (109) equals the lower threshold level.

13. The power network device (100) according to any one of the previous claims further comprising, a communication module (107) configured to communicate one or more of the condition and the one or more parameters to an external system.

14. The power network device (100) according to any one of the previous claims further comprising, an indicator module (106) configured to indicate the condition detected by the processor (105) .

15. The power network device (100) according to any one of the previous claims is a fault sensor indicator device.

## Patentansprüche

1. Leistungsnetzvorrichtung (100), die an einem stromführenden Leiter (101) physisch angeordnet werden kann, wobei die Stromnetzvorrichtung (100) umfasst:
- ein Sensormodul (103), das dafür konfiguriert ist, einen oder mehrere Parameter zu messen, die zu dem stromführenden Leiter (101) gehören,
- einen Prozessor (105), der dafür konfiguriert ist, basierend auf dem einen oder den mehreren Parametern eine Bedingung in dem Leistungsverteilungsnetz zu erkennen,
- ein Leistungsgewinnungsmodul (102), das dafür konfiguriert ist, Leistung zu gewinnen, indem eine induzierte Spannung (V_{ind}) proportional zu dem Netzstrom (I_{L}) gewonnen wird, um ein oder mehrere Module der Leistungsnetzvorrichtung (100) mit Energie zu versorgen, wobei das Leistungsgewinnungsmodul (102) umfasst:
• ein Impedanzregelungsmodul (102A) und
• ein Spannungsbegrenzungsmodul (102C)
- ein Energiespeichermodul (109), das dafür konfiguriert ist, die gewonnene Leistung zu speichern,
- Leistungsübertragungssteuermodul (108), das dafür konfiguriert ist, die gewonnene Leistung selektiv von dem Leistungsgewinnungsmodul (102) oder dem Energiespeichermodul (109) zu dem einen oder den mehreren Modulen der Leistungsnetzvorrichtung (100) zu übertragen,
**dadurch gekennzeichnet, dass** das Leistungsgewinnungsmodul (102) ferner eine dynamische Bürdenimpedanz (102B) umfasst, die ein Spannungsreferenzmodul (102G) und ein Dynamische-Impedanz-Modul (102) in funktionsfähiger Verbindung miteinander umfasst, wobei das Spannungsreferenzmodul (102G) dafür konfiguriert ist, einen vordefinierten Spannungsgrenzwert zu definieren, der als eine Grundlage zum Regeln einer Ausgangsspannung (Vₒₚ₁) des Impedanzregelungsmoduls (102A) dient, und
wobei das Impedanzregelungsmodul (102A) ein Schaltmodul (102D) und ein Leistungserkennungsmodul (102E) zum Erkennen der Leistung, die basierend auf der induzierten Spannung (V_{ind}) und dem Netzstrom (I_{L}) gewonnen wird, und zum Aktivieren des Schaltmoduls (102D) umfasst.

2. Leistungsnetzvorrichtung (100) nach Anspruch 1, wobei das Leistungsgewinnungsmodul (102) eine Flusskonzentrationseinrichtung und mindestens eine Spule, die um die Flusskonzentrationseinrichtung gewickelt ist, umfasst, um die induzierte Spannung (Vi_{nd}) proportional zum Netzstrom (I_{L}) zu gewinnen.

3. Leistungsnetzvorrichtung (100) nach Anspruch 1, wobei das Impedanzregelungsmodul (102A) dafür konfiguriert ist, die Impedanz in dem Leistungsgewinnungsmodul (102) dynamisch zu regeln, um das Übertragen von Leistung, die mit Hilfe der induzierten Spannung (Vi_{nd}) und des Netzstromes (I_{L}) gewonnen wurde, zu mindestens dem Prozessor (105) zu steuern.

4. Leistungsnetzvorrichtung (100) nach einem der Ansprüche 1 und 3, wobei das Impedanzregelungsmodul (102A) ferner eine kompensierende Impedanz (Zc) umfasst, die eine Reaktanz einer Spule des Leistungsgewinnungsmoduls (102) zumindest teilweise aufhebt, wenn die Leistung, die mit Hilfe der induzierten Spannung (Vi_{nd}) und des Netzstromes (I_{L}) gewonnen wird, kleiner als ein vordefinierter Leistungsgrenzwert ist.

5. Leistungsnetzvorrichtung (100) nach Anspruch 1, wobei die dynamische Bürdenimpedanz (102B) als eine variable Last zum Regeln einer Ausgangsspannung (Vₒₚ₁) des Impedanzregelungsmoduls (102A) basierend auf einem vordefinierten Spannungsgrenzwert konfiguriert ist, um den in dem Leistungsgewinnungsmodul (102) induzierten Fluss aufrechtzuerhalten.

6. Leistungsnetzvorrichtung (100) nach Anspruch 1, wobei das Spannungsbegrenzungsmodul (102C) dafür konfiguriert ist, basierend auf einem vordefinierten Lastspannungsgrenzwert eine Ausgangsspannung (Vₒₚ₂) des Leistungsgewinnungsmoduls (102) zu regeln, um zumindest den mit Leistung versorgten Prozessor (105) zu schützen.

7. Leistungsnetzvorrichtung (100) nach Anspruch 1, wobei das Leistungsgewinnungsmodul (102) als eine Energieversorgung im geschalteten Modus konfiguriert ist.

8. Leistungsnetzvorrichtung (100) nach Anspruch 1, wobei das Sensormodul (102) eine Flusskonzentrationseinrichtung und mindestens eine um die Flusskonzentrationseinrichtung gewickelte Spule umfasst, um den einen oder die mehreren Parameter zu messen.

9. Leistungsnetzvorrichtung (100) nach einem der vorhergehenden Ansprüche, ferner ein Parameterkonditionierungsmodul (104) umfassend, das dafür konfiguriert ist, den einen oder die mehreren Parameter dynamisch zu konditionieren.

10. Leistungsnetzvorrichtung (100) nach Anspruch 9, wobei das Parameterkonditionierungsmodul (104) in Verbindung mit einem Prozessor (105) dafür konfiguriert ist, basierend auf einer oder mehreren Eigenschaften einer Flusskonzentrationseinrichtung des Sensormoduls (103) einen oder mehrere Parameter, die von einem Sensormodul (103) gemessen werden, mit Hilfe eines Verstärkermoduls (104C) zu verstärken.

11. Leistungsnetzvorrichtung (100) nach Anspruch 10, wobei das Verstärkermodul (104C) ein einstufiges Verstärkermodul ist, das für einen vordefinierten Bereich von Verstärkungsfaktoren konfigurierbar ist.

12. Leistungsnetzvorrichtung (100) nach Anspruch 1, wobei das Leistungsübertragungssteuermodul (108) umfasst:
- ein Vergleichsmodul (108A), das dafür konfiguriert ist, die gewonnene Leistung, die in dem Energiespeichermodul (109) gespeichert ist, mit einem oberen Grenzwertniveau und einem unteren Grenzwertniveau zu vergleichen, und
- ein Übertragungsschaltmodul (108B), das dafür konfiguriert ist, an eine Spule des Leistungsgewinnungsmoduls (102) einen Kurzschluss anzulegen, wenn die gewonnene Energie, die in dem Energiespeichermodul (109) gespeichert ist, gleich dem oberen Grenzwertniveau ist, und den Kurzschluss von der Spule zu entfernen, wenn die gewonnene Energie, die in dem Energiespeichermodul (109) gespeichert ist, gleich dem unteren Grenzwertniveau ist.

13. Leistungsnetzvorrichtung (100) nach einem der vorhergehenden Ansprüche, ferner ein Kommunikationsmodul (107) umfassend, das dafür konfiguriert ist, eine oder mehrere der Bedingungen und einen oder mehrere Parameter an ein externes System zu kommunizieren.

14. Leistungsnetzvorrichtung (100) nach einem der vorhergehenden Ansprüche, ferner ein Anzeigemodul (106) umfassend, das dafür konfiguriert ist, die durch den Prozessor (105) erkannte Bedingung anzuzeigen.

15. Leistungsnetzvorrichtung (100) nach einem der vorhergehenden Ansprüche, das eine Störungssensorindikatorvorrichtung ist.

## Revendications

1. Dispositif de réseau de puissance (100) pouvant être placé sur un conducteur de transport de courant (101), le dispositif de réseau de puissance (100) comprenant :
- un module de détection (103) configuré pour mesurer un ou plusieurs paramètres associés au conducteur de transport de courant (101),
- un processeur (105) configuré pour détecter un état dans le réseau de puissance fondé sur le ou les paramètres, et
- un module de recueil de puissance (102) configuré pour recueillir de la puissance en recueillant une tension induite (Vi_{nd}) proportionnelle au courant en ligne (I_{L}) afin d'alimenter un ou plusieurs modules du dispositif de réseau de puissance (100), le module de recueil de puissance (102) comprenant :
o un module de régulation d'impédance (102A), et
o un module de limitation de tension (102C),
- un module de stockage de puissance (109) configuré pour stocker la puissance recueillie,
- un module de commande de transfert de puissance (108) configuré pour transférer sélectivement la puissance recueillie vers le ou les modules du dispositif de réseau de puissance (100), à partir de l'un du module de recueil de puissance (102) et du module de stockage de puissance (109),
**caractérisé en ce que** le module de recueil de puissance (102) comprend en outre une impédance de charge dynamique (102B) comprenant un module de référence de tension (102G) et un module d'impédance dynamique (102) en communication fonctionnelle l'un avec l'autre, le module de référence de tension (102G) étant configuré pour définir un seuil de tension prédéfini qui agit comme base de régulation de la tension de sortie (Vₒₚ₁) du module de régulation d'impédance (102A), et
dans lequel le module de régulation d'impédance (102A) comprend un module de commutation (102D) et un module de détection de puissance (102E) permettant de détecter la puissance recueillie sur la base de la tension induite (Vi_{nd}) et du courant en ligne (I_{L}) et permettant d'activer le module de commutation (102D).

2. Dispositif de réseau de puissance (100) selon la revendication 1, dans lequel le module de recueil de puissance (102) comprend un concentrateur de flux et au moins une bobine enroulée sur le concentrateur de flux afin de recueillir la tension induite (Vi_{nd}) proportionnelle au courant en ligne (I_{L}).

3. Dispositif de réseau de puissance (100) selon la revendication 1, dans lequel le module de régulation d'impédance (102A) est configuré pour réguler dynamiquement l'impédance dans le module de recueil de puissance (102) afin de piloter vers au moins le processeur (105) le transfert de puissance recueillie en utilisant la tension induite (Vi_{nd}) et le courant en ligne (I_{L}) .

4. Dispositif de réseau de puissance (100) selon l'une quelconque des revendications 1 et 3, dans lequel le module de régulation d'impédance (102A) comprend en outre une impédance de compensation (Z_{C}) qui rend partiellement nulle la réactance d'une bobine du module de recueil de puissance (102) lorsque l'énergie recueillie en utilisant la tension induite (Vi_{nd}) et le courant en ligne (I_{L}) est inférieure à un seuil de puissance prédéfini.

5. Dispositif de réseau de puissance (100) selon la revendication 1, dans lequel l'impédance de charge dynamique (102B) est configurée comme une charge variable destinée à réguler la tension de sortie (Vₒₚ₁) du module de régulation d'impédance (102A) sur la base d'un seuil de tension prédéfini afin de maintenir le flux induit dans le module de recueil de puissance (102).

6. Dispositif de réseau de puissance (100) selon la revendication 1, dans lequel le module de limitation de tension (102C) est configuré pour réguler la tension de sortie (Vₒₚ₂) du module de recueil de puissance (102) sur la base d'un seuil de tension de charge prédéfini afin de protéger au moins le processeur (105) lorsqu'il est alimenté.

7. Dispositif de réseau de puissance (100) selon la revendication 1, dans lequel le module de recueil de puissance (102) est configuré comme une alimentation en mode commuté.

8. Dispositif de réseau de puissance (100) selon la revendication 1, dans lequel le module de détection (102) comprend un concentrateur de flux et au moins une bobine enroulée sur le concentrateur de flux pour mesurer le ou les paramètres.

9. Dispositif de réseau de puissance (100) selon l'une quelconque des revendications précédentes, comprenant en outre un module de conditionnement de paramètres (104) configuré pour conditionner dynamiquement le ou les paramètres.

10. Dispositif de réseau de puissance (100) selon la revendication 9, dans lequel le module de conditionnement de paramètres (104), en communication avec un processeur (105), est configuré pour amplifier dynamiquement un ou plusieurs paramètres mesurés par un module de détection (103) en utilisant un module amplificateur (104C) fondé sur une ou plusieurs propriétés d'un concentrateur de flux du module de détection (103).

11. Dispositif de réseau de puissance (100) selon la revendication 10, dans lequel le module amplificateur (104C) est un module amplificateur à étage unique configurable pour une plage prédéfinie de facteurs d'amplification.

12. Dispositif de réseau de puissance (100) selon la revendication 1, dans lequel le module de commande de transfert de puissance (108) comprend :
- un module comparateur (108A) configuré pour comparer à un niveau de seuil supérieur et à un niveau de seuil inférieur la puissance recueillie stockée dans le module de stockage de puissance (109), et
- un module de commutation de transfert (108B) configuré pour appliquer un court-circuit aux bornes d'une bobine du module de recueil de puissance (102) lorsque la puissance recueillie stockée dans le module de stockage de puissance (109) est égale au niveau de seuil supérieur, et pour supprimer le court-circuit aux bornes de la bobine lorsque la puissance recueillie stockée dans le module de stockage de puissance (109) est égale au niveau de seuil inférieur.

13. Dispositif de réseau de puissance (100) selon l'une quelconque des revendications précédentes, comprenant en outre un module de communication (107) configuré pour transmettre un ou plusieurs des états et le ou les paramètres à un système extérieur.

14. Dispositif de réseau de puissance (100) selon l'une quelconque des revendications précédentes, comprenant en outre un module indicateur (106) configuré pour indiquer l'état détecté par le processeur (105).

15. Dispositif de réseau de puissance (100) selon l'une quelconque des revendications précédentes qui est un dispositif d'indication de capteur en défaut.
